# EUROPÄISCHE PATENTSCHRIFT

(11) **EP 0 632 759 B1**
(45) Veröffentlichungstag und Bekanntmachung des Hinweises auf die Patenterteilung: **18.12.1996**
(21) Anmeldenummer: 93905083.7
(22) Anmeldetag: 16.03.1993
(51) Int. Cl.: B29B 17/00, B29B 13/10

(54) **VORRICHTUNG ZUM BEHANDELN VON THERMOPLASTISCHEM KUNSTSTOFF**
DEVICE FOR PROCESSING SYNTHETIC THERMOPLASTIC MATERIAL
DISPOSITIF POUR TRAITER DES MATIERES THERMOPLASTIQUES

(30) Priorität: 19.03.1992 AT 563/92
(43) Veröffentlichungstag der Anmeldung: 11.01.1995
(73) Patentinhaber: BACHER, Helmut, A-4490 St. Florian (AT); SCHULZ, Helmuth, A-4490 St. Florian (AT); WENDELIN, Georg, A-4033 Linz (AT)
(72) Erfinder: BACHER, Helmut, A-4490 St. Florian (AT); SCHULZ, Helmuth, A-4490 St. Florian (AT); WENDELIN, Georg, A-4033 Linz (AT)
(74) Vertreter: Wildhack, Helmut, Dipl.-Ing. Dr.
(86) Internationale Anmeldenummer: AT9300051
(87) Internationale Veröffentlichungsnummer: WO9318902

(56) Entgegenhaltungen:
- EP-A- 0 074 346
- EP-A- 0 303 929
- EP-A- 0 321 742
- EP-A- 0 496 080
- WO-A-89/07042
- US-A- 4 222 728

## Beschreibung

Die Erfindung bezieht sich auf eine Vorrichtung zum Behandeln von thermoplastischem Kunststoff, z.B. Abfällen, insbesondere aus Polyester, mit einem Behälter für das zu bearbeitende Gut, dem dieses Gut durch eine Einbringeöffnung zugeführt und aus dem das Gut durch zumindest eine an die Seitenwand des Behälters angeschlossene Schnecke ausgebracht wird, wobei im Bodenbereich des Behälters zumindest ein um eine vertikale Achse drehbares, mit auf das Gut zerkleinernd und bzw. oder mischend einwirkenden Arbeitskanten versehenes Werkzeug angeordnet ist und die Einzugsöffnung der Schnecke zumindest annähernd auf der Höhe des Werkzeuges liegt, und mit zumindest einer an den Behälter angeschlossenen Leitung zur Erzeugung eines Vakuums und gegebenenfalls zur Begasung im Behälterinnenraum.

Derartige Vorrichtungen sind bekannt (EP-A 390,873), sie arbeiten im allgemeinen befriedigend, auch bei der Verarbeitung solcher Kunststoffsorten, welche empfindlich sind auf Luftsauerstoff und bzw. oder Feuchtigkeit, da durch Evakuierung des Behälters bzw. durch Einführung eines Schutzgases in das Behälterinnere das Kunststoffmaterial gegen diese schädlichen Einflüsse geschützt werden kann.

Es hat sich jedoch gezeigt, daß in manchen Fällen der Homogenisierungsgrad des über die Schnecke abgeführten Kunststoffmateriales nicht ausreichend ist, insbesondere in Bezug auf den erzielten Trocknungsgrad solcher Kunststoffmaterialien, die zur Vermeidung von Degradierung bereits vor der Plastifizierung völlig trocken sein müssen, z.B. Polyester. Polyesterteile, z.B. Folien größerer Stärke, erfordern einen mit der Dicke zunehmenden gesteigerten Trockenaufwand, wodurch für derartiges Gut gesonderte Trockenvorgänge, z.B. mit dehydrierter Luft, in speziellen Trocknern notwendig sind. Diese Trockner arbeiten darüber hinaus in einem Temperaturbereich, der nur für kristallisiertes Gut zulässig ist, amorphes Gut würde klebrig werden und dadurch zusammenbacken. Dies bedeutet, daß dem Trockenvorgang ein Kristallisiervorgang vorgeschaltet werden muß. Wird aber das zu bearbeitende Gut lange im Behälter durch das Werkzeug bearbeitet, dann entsteht bei kontinuierlichem Betrieb der Vorrichtung die Gefahr, daß einzelne Kunststoffteilchen schon sehr früh von der Austragsschnecke erfaßt werden, andere Kunststoffteilchen jedoch erst sehr spät. Die früherfaßten Kunststoffteilchen können noch verhältnismäßig kalt und daher nicht ausreichend vorbehandelt sein, wodurch die erwähnten Inhomogenitäten im Material entstehen, das mittels der Schnecke dem angeschlossenen Werkzeug, z.B. einem Extruderkopf, zugeführt wird.

Die Erfindung setzt sich zur Aufgabe, diese Nachteile zu vermeiden und die Homogenität des ausgetragenen Materiales wesentlich zu verbessern, wobei der Vakuumeffekt im Behälter in vorteilhafter Weise ausgenützt wird. Die Erfindung löst diese Aufgabe dadurch, daß an die Einbringeöffnung die Ausbringeöffnung zumindest eines weiteren Behälters mittels eines Rohrstutzens angeschlossen ist, in welchem Behälter gleichfalls zumindest ein um eine vertikale Achse umlaufendes Werkzeug im Bodenbereich des Behälters vorgesehen ist, und daß im Rohrstutzen ein Absperrorgan zum druckdichten Abschluß des Rohrstutzens zwecks Aufrechterhaltung des Vakuums im Inneren des mit der Leitung versehenen Behälters angeordnet ist. Bei der erfindungsgemäßen Vorrichtung sind somit zwei oder mehr Behälter in Serie angeordnet und das zu verarbeitende Kunststoffmaterial muß diese Behälter der Reihe nach durchlaufen. Im ersten Behälter wird bereits eine Vorbehandlung des Kunststoffmateriales durch eine Vorzerkleinerung, Vorwärmung, Vortrocknung und Vorverdichtung vorgenommen, so daß vorhomogenisiertes Material erzeugt wird, welches dem folgenden Behälter vorgelegt wird. Dadurch wird sichergestellt, daß kein unbehandeltes (kaltes, unverdichtetes, unzerkleinertes bzw. inhomogenes) Material direkt der Austragsschnecke und über diese dem angeschlossenen Extruder od.dgl. zugeht. Durch das Absperrorgan im die Behälter verbindenden Rohrstutzen läßt sich eine völlige und verläßliche Dichtung zwischen den beiden Behältern erzielen, so daß Vakuum- oder Schutzgasverluste im nachgeschalteten Behälter völlig vermieden sind, solange das Absperrorgan geschlossen bleibt, also solange im vorgeschalteten Behälter die Vorbehandlung erfolgt. Es lassen sich also die Vorteile der Vorbehandlung auch dann wahren, wenn im zweiten und bzw. oder einem folgenden Behälter eine Vakuum- oder Schutzgasbehandlung des thermoplastischen Kunststoffgutes stattfindet. Das Vakuum dieser Behandlung wird sogar zur Steigerung des Mischeffektes und somit zur Verbesserung der Homogenität des aus dem nachgeschalteten Behälter ausgetragenen Materiales ausgenützt, denn bei Öffnung des Absperrorganes bewirkt das Vakuum im nachgeschalteten Behälter eine schlagartige Ansaugung des im vorgeschalteten Behälter befindlichen Materiales, sodaß eine schlagartige Durchmischung im nachgeschalteten Behälter unter Einwirkung von Vakuum stattfindet.

Die Verhältnisse werden dann besonders günstig, wenn gemäß einer Weiterbildung der Erfindung die Ausbringeöffnung des weiteren Behälters (also des vorgeschalteten Behälters) zumindest annähernd auf der Höhe des Werkzeuges in diesem Behälter liegt, also im Bodenbereich des Behälters, da dann die erwähnte Absaugung des im vorgeschalteten Behälter befindlichen Gutes ohne wesentliche Umlenkung desselben erfolgen kann. Außerdem fördert, wenn die Öffnung des Absperrventiles bei umlaufendem Werkzeug erfolgt, das im vorgeschalteten Behälter umlaufende Werkzeug durch Zentrifugalkraft in die Ausbringeöffnung hinein, sodaß in kürzestmöglicher Zeit eine Überführung des im vorgeschalteten Behälter vorbehandelten Gutes in den nachgeschalteten Behälter erfolgt. Sobald dann das Absperrventil wieder geschlossen ist, kann eine neue Charge in den vorgeschalteten Behälter eingebracht und dort vorbehandelt werden.

In der prioritätsälteren, jedoch nicht vorveröffentlichten EP-A 496 080 ist die Hintereinanderschaltung zweier mit umlaufenden Zerkleinerungswerkzeugen versehenen Behältern zur Behandlung von Kunststoffabfällen vorgeschlagen. Aus dem ersten Behälter wird das Material mittels einer Transportschnecke in den zweiten Behälter eingebracht. Eine solche Transportschnecke läßt sich nicht druckdicht ausbilden.

Im Rahmen der Erfindung kann das Absperrorgan im einfachsten Fall eine Schieberplatte aufweisen, welche geschlossen wird, sobald die Vakuumbehandlung bzw. die Begasung im nachgeschalteten Behälter erfolgt. Dadurch ist allerdings kein kontinuierlicher Betrieb mehr möglich, vielmehr muß die Beschickung des nachgeschalteten Behälters chargenweise erfolgen. Ist jedoch gemäß einer anderen Ausführungsvariante der Erfindung das Absperrorgan eine Schleuse, insbesondere eine Zellenradschleuse, so wird die erwähnte Dichtung zwischen den beiden Behältern aufrecht erhalten und dennoch ein kontinuierlicher Betrieb möglich. Um zu vermeiden, daß durch die Zellen der Schleuse zu starke Vakuumverluste auftreten, können diese Zellen ebenfalls evakuiert bzw. begast werden.

Wie bereits erwähnt, unterstützt das im nachgeschalteten Behälter gebildete Vakuum die Einsaugung des zu bearbeitenden Gutes aus dem vorgeschalteten Behälter. Bei solchen Anlagen können daher in der Regel die Behälter auf gleicher Höhe angeordnet werden. Will man jedoch die Befüllung des nachgeschalteten Behälters bzw. die Durchmischung des Materials in ihm durch Schwerkrafteinfluß verbessern, so kann gemäß einer Weiterbildung der Erfindung die Anordnung so getroffen sein, daß der in Fließrichtung des Gutes vorgeschaltete Behälter höher liegt als der folgende Behälter. Letzterer kann daher auch im Mittelbereich oder im oberen Bereich seiner Seitenwand und gegebenenfalls auch durch den Deckel von oben her beschickt werden.

Es hat sich im Rahmen der Erfindung als besonders günstig erwiesen, wenn die Ausbringeöffnung des in Fließrichtung des Gutes vorgeschalteten Behälters an der Zulaufseite des Werkzeuges eine Verbreiterung hat. Diese Verbreiterung bewirkt ein besseres Einströmen des Gutes in den Überströmquerschnitt. Eine analoge Verbesserung wird an der Austrittsseite des Überströmquerschnittes erfindungsgemäß dadurch erzielt, daß die Einbringeöffnung des in Fließrichtung des Gutes nachgeschalteten Behälters an der Ablaufseite des Werkzeuges eine Verbreiterung hat. Die Verbreiterungen können im Rahmen der Erfindung taschenartig sein, vorzugsweise mit sichelförmig verlaufendem Querschnitt, um eine sanfte Aus- bzw. Einleitung des Gutes aus dem bzw. in den Behälter zu sichern.

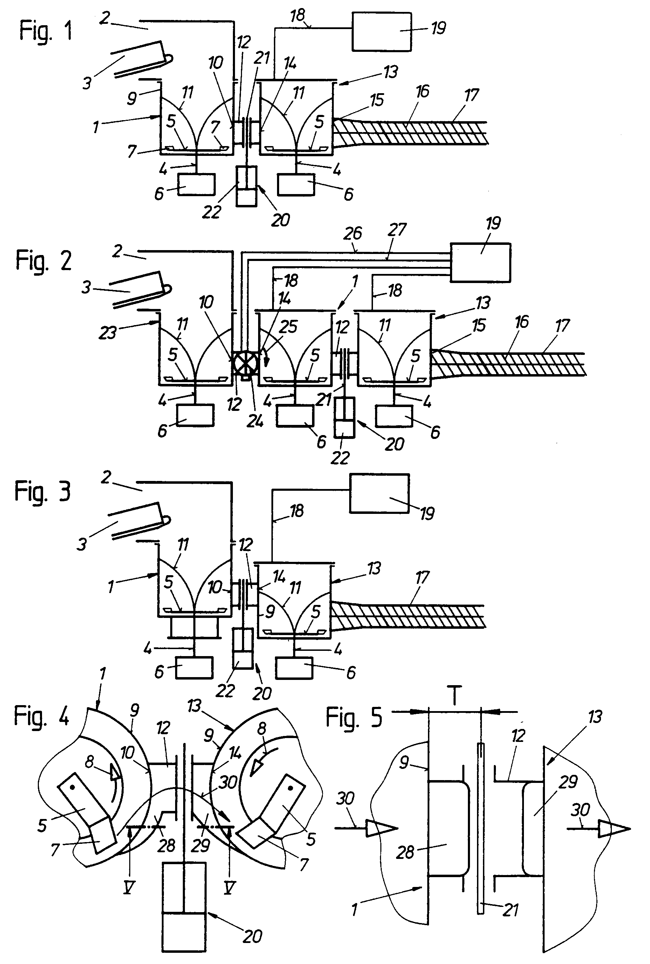

In der Zeichnung sind Ausführungsbeispiele der Erfindung schematisch dargestellt. Die Fig. 1, 2 und 3 zeigen je einen Vertikalschnitt durch verschiedene Ausführungsformen der Vorrichtung. Fig. 4 ist ein Horizontalschnitt, welcher die Ausbildung der taschenförmigen Verbreiterungen des Überströmquerschnittes zeigt. Fig. 5 ist ein Schnitt nach der Linie V-V der Fig. 4.

Bei der Ausführungsform nach Fig. 1 ist ein erster Behälter 1 vorgesehen, dem das zu behandelnde thermoplastische Kunststoffgut, z.B. Polyesterabfälle in Form von Folienresten, gebrauchten Artikeln (z.B. Flaschen) usw., durch eine Einbringeöffnung 2 hindurch mittels eines Förderers 3 kontinuierlich zugeführt wird. Im Bodenbereich des Behälters 1 ist ein um eine vertikale Achse 4 drehbares Werkzeug 5 angeordnet, das von einem Motor 6 zur Rotation angetrieben wird und das im Behälter 1 befindliche Kunststoffgut zerkleinert und mischt. Hiezu ist das Werkzeug 5 mit zumindest zwei sich normal zur Achse 4 erstreckenden Armen ausgebildet, die mit auf das Kunststoffgut einwirkenden Arbeitskanten 7 versehen sind. Diese Arbeitskanten 7 verlaufen, in Drehrichtung (Pfeil 8, Fig. 4) des Werkzeuges 5 gesehen, winkelförmig zurückversetzt, sodaß sie einerseits auf das im Randbereich des Behälters 1 befindliche Kunststoffmaterial einen ziehenden Schnitt ausüben und anderseits das zerkleinerte Material spachtelartig in eine in der Seitenwand 9 des Behälters 1 angeordnete Ausbringeöffnung 10 fördern, die im wesentlichen auf derselben Höhe liegt wie das Werkzeug 5. Das im Behälter 1 umlaufende Kunststoffmaterial steigt entlang den Seitenwänden 9 des Behälters 1 hoch und bildet eine Mischthrombe 11, deren Gestalt abhängt von der Art, der Menge und der Geschwindigkeit des Materiales. An die Ausbringeöffnung 10 ist ein zweiteiliger Rohrstutzen 12 mit einem Absperrorgan 20 angeschlossen, durch den das aus dem Behälter 1 ausgetriebene vorzerkleinerte Material bei geöffnetem Absperrorgan 20 in einen weiteren Behälter 13 gelangt, der auf derselben Höhe angeordnet ist wie der Behälter 1 und in welchem ein gleichartig zum Werkzeug des Behälters 1 ausgebildetes Werkzeug 5, angetrieben durch einen Motor 6, umläuft und annähernd auf derselben Höhe liegt wie die von der Mündung des Rohrstutzens 12 gebildete Einbringeöffnung 14. Das durch diese Öffnung 14 in den Behälter 13 eingebrachte vorzerkleinerte Material wird vom umlaufenden Werkzeug 5 erfaßt und bildet im Behälter 13 ebenfalls eine Mischthrombe 11. Hiebei erfolgt eine weitere Zerkleinerung und Homogenisierung des Kunststoffmateriales` welches schließlich vom Werkzeug 5 in die Einzugsöffnung 15 einer Schnecke 16 gefördert wird, deren Gehäuse 17 zweckmäßig zumindest annähernd radial zur Achse des Behälters 13 angeordnet ist. Im Bereich der Einzugsöffnung 15 ist das Gehäuse 17 zweckmäßig trichterartig erweitert, um den Einzug des Materiales zu erleichtern. Die Einzugsöffnung 15 liegt zumindest annähernd auf der Höhe des Werkzeuges 5. Die Schnecke 16 fördert das behandelte Kunststoffgut zu einer an die Vorrichtung angeschlossenen, nicht dargestellten Anlage, z.B. zu einem Schneckenextruder bzw. es kann die Schnecke 16 selbst die Schnecke dieses Schneckenextruders bilden.

Für die Behandlung solchen Kunststoffgutes, welches im erwärmten Zustand empfindlich ist gegen Luftzutritt, bzw. zur Verringerung der Trocknungszeit, mündet in den Behälter 13 eine Leitung 18, die an eine Vorrichtung 19 zur Erzeugung eines Vakuums im Behälter 13 bzw. zur Einleitung eines Schutzgases in diesen Behälter 13 angeschlossen ist. Die Aufrechterhaltung der gewünschten Atmosphäre bzw. des gewünschten Druckes im Behälter 13 wird durch das Absperrorgan 20 gesichert, welches in den Rohrstutzen 12 eingebaut ist, was durch eine zweiteilige Ausführung des Rohrstutzens 12 erleichtert wird. Im dargestellten Ausführungsbeispiel ist dieses Absperrorgan 20 von einer Schieberplatte 21 gebildet, die mit der Kolbenstange eines Druckmittelzylinders 22 verbunden ist. Dieser Schieber 21 dichtet den Behälter 13 völlig gegen den Behälter 1 ab.

Die Ausführungsform nach Fig.2 unterscheidet sich von jener nach Fig.1 vor allem dadurch, daß noch ein dritter Behälter 23 vorgesehen ist, welcher dem Behälter 1 vorgeschaltet ist und dessen Ausbringeöffnung 10 mit der Einbringeöffnung 14 des Behälters 1 verbunden ist. Die Zerkleinerung, Erwärmung, Trocknung und Verdichtung des behandelten Kunststoffgutes zwecks Homogenisierung desselben erfolgt hier also dreistufig. In die letzten beiden Behälter 1, 13 führen wieder Leitungen 18 zur Evakuierung bzw. Begasung der Behälter. Die in Fließrichtung des Gutes gesehen, ersten beiden Behälter 23, 1 können wieder durch einen Rohrstutzen 12 verbunden sein, in welchen, wie dies Fig. 1 zeigt, ein von einem Schieberventil gebildetes Absperrorgan 20 eingeschaltet sein kann, wie dies auch für den die beiden Behälter 1, 13 verbindenden Rohrstutzen 12 in Fig. 2 gezeigt ist. Da der Abschluß mittels eines Absperrorganes in Form eines Schieberventiles jedoch keinen völlig kontinuierlichen Betrieb zuläßt, ist das Absperrorgan 20 im Rohrstutzen 12 zwischen den Behältern 23, 1 als Zellenradschleuse 24 ausgebildet, deren Zellenrad in Richtung des Pfeiles 25 umläuft. Eine solche Zellenradschleuse kann auch statt des zwischen den Behältern 1, 13 liegenden Schieberventiles treten. Die in Laufrichtung (Pfeil 25) des Zellenrades gesehen, der Ausbringeöffnung 10 vorangehende Zelle der Zellenradschleuse 24 ist mittels einer Leitung 26 an die Vorrichtung 19 zur Evakuierung bzw. Begasung angeschlossen, so daß also das den Behälter 23 verlassende vorzerkleinerte Gut schon evakuiert bzw. mit Schutzgas begast werden kann, bevor es noch in den Behälter 1 eingeführt wird. Eine weitere Leitung 27 kann zu den, in Umlaufrichtung des Pfeiles 25 gesehen, vor der Ausbringeöffnung 10 liegenden Zellen führen, um diese zu evakuieren und dadurch die Ansaugung des Kunststoffgutes aus dem Behälter 23 zu begünstigen.

Während bei den bisher beschriebenen Ausführungsformen die Behälter bzw. deren Aus- und Einbringeöffnungen stets zumindest im wesentlichen auf gleicher Höhe liegen und der Transport des Kunststoffgutes aus dem einen Behälter in den folgenden Behälter lediglich durch diese von dem Werkzeug 5 ausgeübte Zentrifugalkraft, unterstützt durch das Vakuum im nächstfolgenden Behälter bzw. in der Zellenradschleuse, erfolgt, zeigt Fig. 3 eine Ausführungsform, bei welcher zwei Behälter 1, 13 auf verschiedener Höhe angeordnet sind, und zwar liegt der Behälter 13 tiefer als der Behälter 1. Da der Rohrstutzen 12 horizontal liegt, gelangt die Einbringeöffnung 14 des Behälters 13 in den Mittelabschnitt der Seitenwand 9. Dies hat zur Folge, daß die Überführung und Mischung des Kunststoffgutes vom Behälter 1 in den Behälter 13 durch Schwerkraftwirkung unterstützt wird. Dies kann noch dadurch gesteigert werden, daß der Rohrstutzen 12 gegen den Behälter 13 zu abfällt.

In den Fig. 4 und 5 ist der Bereich des Absperrorgans 20 in größerem Maßstab dargestellt. Fig. 4 zeigt, daß die Ausbringeöffnung 10 des Behälters 1 an der Zulaufseite des Werkzeuges 5 eine Verbreiterung 28 hat, die als Tasche mit sichelförmig verlaufendem Querschnitt (gesehen in Draufsicht, Fig. 4) ausgebildet ist. Eine analoge Verbreiterung 29 weist die Einbringeöffnung 14 des folgenden Behälters 13 auf, jedoch liegt diese Verbreiterung 29 an der Ablaufseite des Werkzeuges 5. Die beiden Verbreiterungen 28, 29 liegen daher - gegebenenfalls spiegelbildlich - einander gegenüber, soferne die beiden Werkzeuge 5 in den Behältern 1, 13 in der gleichen Richtung umlaufen, was nicht notwendigerweise sein muß. Diese taschenartigen Verbreiterungen bewirken eine Verbesserung des Ein- bzw. Ausströmverhaltens des in der Richtung der Pfeile 30 strömenden Gutes, so daß der Durchströmwiderstand durch den Rohrstutzen 12 herabgesetzt wird. Selbstverständlich kann auch hier statt des als Schieber ausgebildeten Absperrorganes 20 eine Schleuse, etwa in Form der Zellenradschleuse 24, treten.

Um Verstopfungen im Rohrstutzen 12 zu vermeiden, soll der Abstand T (Fig. 5), welchen die Schieberplatte 21 von der Wand 9 des vorgeschalteten Behälters hat, klein sein. Es hat sich als zweckmäßig erwiesen, die Schieberplatte 21 dort anzuordnen, wo die taschenartige Verbreiterung 28 ihre größte Tiefe hat. Die Schieberplatte 21 liegt daher im allgemeinen exzentrisch in Bezug auf die Mitte zwischen den beiden Behältern 1, 13.

Die Ausführungsform nach Fig. 2 ermöglicht es, in den beiden Behältern 1, 13 über die Leitungen 18 unterschiedliche Verfahrensbedingungen aufrechtzuerhalten, etwa ein Vakuum im Behälter 1 und eine Schutzgasbegasung im Behälter 13 oder umgekehrt. Es ist natürlich auch möglich, in beiden Behältern 1, 13 ein Vakuum aufrechtzuerhalten, jedoch mit unterschiedlichem Evakuierungsgrad, wobei im allgemeinen im nachfolgenden Behälter 13 das Vakuum größer gewählt wird, als im vorgeschalteten Behälter 1. Für diesen Fall wird nämlich bei Öffnen des Absperrorgans 20 das behandelte Material in den nachgeschalteten Behälter eingesaugt. Dies gilt auch für die Ausbildung des Absperrorgans 20 als Zellenradschleuse 24, nur ist bei einer Zellenradschleuse 24 die Einbringung des Gutes in den nachgeschalteten Behälter nicht so plötzlich wie bei der Öffnung eines als Schieberventil ausgebildeten Absperrorgans 20.

Es wäre auch denkbar, an einen gemeinsamen, vorgeschalteten Behälter 1 mehr als einen nachgeschalteten Behälter 13 anzuschließen, um die Leistungsfähigkeit der Anlage zu steigern. In den nachgeschalteten Behältern 13 könnten, falls dies gewünscht ist, unterschiedliche Arbeitsbedingungen über die Leitung 18 aufrechterhalten werden.

Der Mantel jedes Behälters kann zusätzlich beheizbar oder kühlbar ausgeführt werden, z.B. durch Heiz- oder Kühlschlangen oder durch einen Doppelmantel. Dadurch können in den einzelnen Behältern auch unterschiedliche Temperaturbedingungen eingehalten werden.

Weiters wäre es möglich, an einen oder mehrere der nachgeschalteten Behälter 13 mehr als eine Austragsschnecke 16 anzuschließen, und so vom Behälter 13 mehr als eine Extruderanlage zu speisen.

Weiters wäre es denkbar, in einzelnen oder allen der Behälter mehr als ein umlaufendes Werkzeug 5 anzuordnen, z.B. zwei nebeneinanderliegende Werkzeuge.

## Patentansprüche

1. Vorrichtung zum Behandeln von thermoplastischem Kunststoff, z.B. aus Polyester, gegebenenfalls in Form von Abfällen, mit einem Behälter (13) für das zu bearbeitende Gut, dem dieses Gut durch eine Einbringeöffnung (14) zugeführt und aus dem das Gut durch zumindest eine an die Seitenwand des Behälters (13) angeschlossene Schnecke (16) ausgebracht wird, wobei im Bodenbereich des Behälters (13) zumindest ein um eine vertikale Achse drehbares, mit auf das Gut zerkleinernd und bzw. oder mischend einwirkenden Arbeitskanten (7) versehenes Werkzeug (5) angeordnet ist und die Einzugsöffnung (15) der Schnecke (16) zumindest annähernd auf der Höhe des Werkzeuges (5) liegt, und mit zumindest einer an den Behälter (13) angeschlossenen Leitung (18) zur Erzeugung eines Vakuums und gegebenenfalls zur Begasung im Behälterinnenraum, dadurch gekennzeichnet, daß an die Einbringeöffnung (14) die Ausbringeöffnung (10) zumindest eines weiteren Behälters (1,23) mittels eines Rohrstutzens (12) angeschlossen ist, in welchem Behälter (1,23) gleichfalls zumindest ein um eine vertikale Achse (4) umlaufendes Werkzeug (5) im Bodenbereich des Behälters (1, 23) vorgesehen ist, und daß im Rohrstutzen (12) ein Absperrorgan (20) zum druckdichten Abschluß des Rohrstutzens (12) zwecks Aufrechterhaltung des Vakuums im Inneren des mit der Leitung (18) versehenen Behälters (13) angeordnet ist.

2. Vorrichtung nach Anspruch 1, dadurch gekennzeichnet, daß die Ausbringeöffnung (10) des weiteren Behälters (1, 23) zumindest annähernd auf der Höhe des Werkzeuges (5) in diesem Behälter (1, 23) liegt.

3. Vorrichtung nach Anspruch 1 oder 2, dadurch gekennzeichnet, daß das Absperrorgan (20) eine Schieberplatte (21) aufweist.

4. Vorrichtung nach Anspruch 1 oder 2, dadurch gekennzeichnet, daß das Absperrorgan (20) eine Schleuse, insbesondere eine Zellenradschleuse (24), aufweist.

5. Vorrichtung nach einem der Ansprüche 1 bis 4, dadurch gekennzeichnet, daß der in Fließrichtung des Gutes vorgeschaltete Behälter (1) höher liegt als der folgende Behälter (13) (Fig. 3).

6. Vorrichtung nach einem der Ansprüche 1 bis 5, dadurch gekennzeichnet, daß die Ausbringeöffnung (10) des in Fließrichtung des Gutes vorgeschalteten Behälters (1) an der Zulaufseite des Werkzeuges (5) eine Verbreiterung (28) hat (Fig. 4, 5).

7. Vorrichtung nach einem der Ansprüche 1 bis 6, dadurch gekennzeichnet, daß die Einbringeöffnung (14) des in Fließrichtung des Gutes nachgeschalteten Behälters (13) an der Ablaufseite des Werkzeuges (5) eine Verbreiterung (29) hat (Fig. 4, 5).

8. Vorrichtung nach Anspruch 6 oder 7, dadurch gekennzeichnet, daß die Verbreiterung (28, 29) taschenartig, vorzugsweise mit sichelförmig verlaufendem Querschnitt, ist.

9. Vorrichtung nach einem der Ansprüche 1 bis 8, dadurch gekennzeichnet, daß das Absperrorgan (20) nahe der Wand (9) des in Fließrichtung des Gutes vorgeschalteten Behälters (1) angeordnet ist, vorzugsweise am Grund der Verbreiterung (28) der Austrittsöffnung (10) dieses Behälters (1).

10. Vorrichtung nach einem der Ansprüche 1 bis 9, dadurch gekennzeichnet, daß die Behälter (1,13,23), gegebenenfalls unterschiedlich, beheizbar und bzw. oder kühlbar sind.

## Claims

1. A device for processing thermoplastic synthetic material, for example of polyester, optionally in the form of waste, with a container (13) for the material to be treated, to which the said material is conveyed through an insertion opening (14) and from which the material is removed by at least one worm (16) attached to the lateral wall of the container (13), wherein at least one tool (5) rotatable about a vertical shaft and provided with operating edges (7) acting in such a way as to crush and/or mix the material is arranged in the base area of the container (13) and wherein the entry opening (15) of the worm (16) is situated at least approximately at the level of the tool (5), and with at least one line (18) connected to the container (13) for producing a vacuum and optionally for gassing the interior of the container, **characterized in that** the discharge opening (10) of at least one further container (1, 23) is connected to the insertion opening (14) by means of a pipe connexion (12), in which container (1, 23) at least one tool (5) revolving about a vertical shaft (4) is likewise provided in the base area of the container (1, 23), and a shut-off member (20) for closing off the pipe connexion (12) in a pressure-tight manner is arranged in the pipe connexion (12) in order to maintain the vacuum in the interior of the container (13) provided with the line (18).

2. A device according to Claim 1, **characterized in that** the discharge opening (10) of the further container (1, 23) is situated at least approximately at the level of the tool (5) in the said container (1, 23).

3. A device according to Claim 1 or 2, **characterized in that** the shut-off member (20) comprises a slide plate (21).

4. A device according to Claim 1 or 2, **characterized in that** the shut-off member (20) comprises a sluice, in particular a cellular wheel sluice (24).

5. A device according to one of Claims 1 to 4, **characterized in that** the container (1) arranged upstream in the direction of flow of the material is situated at a higher level than the following container (13) (Fig. 3).

6. A device according to one of Claims 1 to 5, **characterized in that** the discharge opening (10) of the container (1) arranged upstream in the direction of flow of the material has a widened portion (28) on the inflow side of the tool (5) (Figs. 4, 5).

7. A device according to one of Claims 1 to 6, **characterized in that** the insertion opening (14) of the container (13) arranged downstream in the direction of flow of the material has a widened portion (29) on the outflow side of the tool (5) (Figs. 4, 5).

8. A device according to Claim 6 or 7, **characterized in that** the widened portion (28, 29) is formed in the manner of a pocket, preferably with a cross-section extending in the shape of a sickle.

9. A device according to one of Claims 1 to 8, **characterized in that** the shut-off member (20) is arranged close to the wall (9) of the container (1) arranged upstream in the direction of flow of the material, preferably on the base of the widened portion (28) of the discharge opening (10) of the said container (1).

10. A device according to one of Claims 1 to 9, **characterized in that** the containers (1, 13, 23) can be heated and/or cooled, optionally in a different manner.

## Revendications

1. Dispositif pour traiter des matières thermoplastiques, en polyester par exemple, éventuellement sous forme de déchets, avec un récipient (13) pour le produit à traiter, auquel ce produit est apporté par une ouverture d'introduction (14) et duquel le produit est évacué par au moins une vis sans fin (16) raccordée à la paroi latérale du récipient (13), au moins un outil (5), rotatif autour d'un axe vertical et pourvu d'arêtes de travail (7) ayant une action de broyage et/ou de mélangeage sur le produit, étant disposé dans la région de fond du récipient (13) et l'ouverture de chargement (15) de la vis sans fin (16) se trouvant au moins approximativement à hauteur de l'outil (5), et avec au moins une conduite (18) raccordée au récipient (13) pour produire un vide et éventuellement pour l'introduction d'un gaz à l'intérieur du récipient, **caractérisé** en ce que l'ouverture d'évacuation (10) d'au moins un récipient supplémentaire (1, 23) est raccordée au moyen d'une tubulure (12) à l'ouverture d'introduction (14), au moins un outil (5) rotatif autour d'un axe vertical (4) étant pareillement prévu dans ce récipient supplémentaire (1, 23), dans la région de fond du récipient (1, 23), et en ce qu'un organe d'isolement (20) est disposé dans la tubulure (12) afin d'obturer en étanchéité à la pression la tubulure (12) dans le but de maintenir le vide à l'intérieur du récipient (13) pourvu de la conduite (18).

2. Dispositif selon la revendication 1, **caractérisé** en ce que l'ouverture d'évacuation (10) du récipient supplémentaire (1, 23) se trouve au moins approximativement à hauteur de l'outil (5) dans ce récipient (1, 23).

3. Dispositif selon la revendication 1 ou 2, **caractérisé** en ce que l'organe d'isolement (20) présente un tiroir plan (21).

4. Dispositif selon la revendication 1 ou 2, **caractérisé** en ce que l'organe d'isolement (20) présente un sas, notamment un sas à roue cellulaire (24).

5. Dispositif selon une des revendications 1 à 4, **caractérisé** en ce que le récipient (1) antérieur dans la direction d'écoulement du produit se trouve plus haut que le récipient consécutif (13) (figure 3).

6. Dispositif selon une des revendications 1 à 5, **caractérisé** en ce que l'ouverture d'évacuation (10) du récipient (1) antérieur dans la direction d'écoulement du produit possède un élargissement (28) sur le côté d'admission de l'outil (5) (figures 4, 5).

7. Dispositif selon une des revendications 1 à 6, **caractérisé** en ce que l'ouverture d'introduction (14) du récipient (13) postérieur dans la direction d'écoulement du produit possède un élargissement (29) sur le côté d'évacuation de l'outil (5) (figures 4, 5).

8. Dispositif selon la revendication 6 ou 7, **caractérisé** en ce que l'élargissement (28, 29) est du genre poche, de préférence avec une section s'étendant en forme de croissant.

9. Dispositif selon une des revendications 1 à 8, **caractérisé** en ce que l'organe d'isolement (20) est disposé à proximité de la paroi (9) du récipient (1) antérieur dans la direction d'écoulement du produit, de préférence sur le fond de l'élargissement (28) de l'ouverture de sortie (10) de ce récipient (1).

10. Dispositif selon une des revendications 1 à 9, **caractérisé** en ce que les récipients (1, 13, 23) peuvent être chauffés et/ou refroidis, éventuellement de façons différentes.
